# EUROPEAN PATENT SPECIFICATION

(11) **EP 2 884 012 B1**
(45) Date of publication and mention of the grant of the patent: **30.11.2016**
(21) Application number: 14197737.1
(22) Date of filing: 12.12.2014
(51) Int. Cl.: E03C 1/04, F16K 11/18, F16K 11/20, F16K 31/58

(54) **Supplying device with tilting barrel**
Versorgungsvorrichtung mit Kippzylinder
Dispositif d'alimentation avec canon oscillant

(30) Priority: 12.12.2013 IT MI20132072
(43) Date of publication of application: 17.06.2015
(73) Proprietor: GM Rubinetterie S.r.l., 28040 Oleggio Castello (NO) (IT)
(72) Inventor: Gioira, Luigi, 28040 Oleggio Castello (NO) (IT); Gioira, Marco, 28040 Oleggio Castello (NO) (IT)
(74) Representative: Candito, Rocco

(56) References cited:
- EP-A1- 0 577 164
- EP-A1- 1 491 805
- EP-A1- 2 672 027
- EP-A2- 0 200 895
- WO-A1-2006/072250
- DE-U1-202004 005 561

## Description

### BACKGROUND OF THE INVENTION

This invention relates to a supplying device with tilting barrel, particularly for dispensing and/or mixing at least three different types of liquid (sanitary water), for example hot water, cold water and treated water.

Specifically, though not exclusively, this invention can be applied to water and sanitary devices positioned below windows, in order to allow the window being opened without interference by tilting the supply barrel.

The prior art comprises the published patent No. EP 1491805 showing an example of a single handle tap with tilting barrel.

It is also known, from the published patent n. EP 2472150, a device for selectively supplying cold, hot and mixed sanitary water, as well as purified water with possible addition of gas by means of carbon dioxide.

DE202004005561 discloses a one-lever mixer, especially for installation in trailers and caravans, including a water discharge fitting comprising a foldable water discharge pipe rotatably connected to a fitting body.

WO2006072250 discloses a mixer tap including an elongated tap body which is in a stationary position, each end of the tap body being provided with a rotatable adjusting handle, to adjust the supply of hot and cold water, respectively. The adjusting handle for cold water can also be operated for supplying filtered water.

Other water supplying devices are also known from EP0200895, EP2672027 and EP0577164.

### SUMMARY OF THE INVENTION

An object of the invention is to provide a supplying device having a tilting barrel for selectively supplying mixed water and treated water.

An advantage thereof is to provide a supplying device having a tilting barrel which can be installed in a quick and user-friendly manner.

An advantage thereof is to provide a supplying device having a tilting barrel which operates in a reliable manner without water leakages.

An advantage thereof is to provide a supplying device having a tilting barrel which is of a simple construction and cost-effective.

These and other objects and advantages are achieved by the supplying device according to one or more of the claims below.

In one example, a supplying device comprises a main body carrying a mixing-tap for mixing two streams and a tap for adjusting a third stream, wherein the path of the two-stream mix and the path of the third stream pass, for example, the one separated from the other, through a bush rotatably mounted to the main body and then merge inside a hollow barrel-holding element interposed between the barrel and the bush.

In one example, the supplying device comprises a main body, a bush rotatably mounted to the main body, a barrel-holding shank rotatably integral with the bush and a tilting barrel mounted to the shank; the main body carries, on the one side, a mixing-tap for mixing cold water and hot water and, on the opposite side, a tap for adjusting treated water, wherein the path of the mixed cold/hot water and the path of the treated water pass through the bush, for example being separated from one another by sealing means arranged between the bush and the main body. The mixed treated water then merges into a hollow area inside the barrel-holding shank interposed between the bush and the tilting barrel, whereas the mixed water inflows, in a separate manner from the treated water, into an annular area surrounding the shank. The tilting barrel is defined by two co-axial tubular elements defining two distinct and separate supplying conduits which are axially arranged relative to one another. In other words, a more internal first conduit results defined, which is in fluid communication with said individual internal hollow area, which conduit is intended to be passed through only by the treated water, and a second co-axial external conduit, in fluid communication with said individual annular area, which conduit is intended to be passed through only by the mixed water. Accordingly, the mixed water and the treated water thereby flow along distinct and separate dispensing paths.

### BRIEF DESCRIPTION OF THE DRAWINGS

This invention will be better understood and carried out with reference to the annexed drawings illustrating a non-limiting exemplary embodiment thereof.
Fig. 1 is a perspective view of an example of a device provided in accordance with the invention with the barrel in the raised position.
Fig. 2 is the view of Fig. 1 with the barrel in the lowered position.

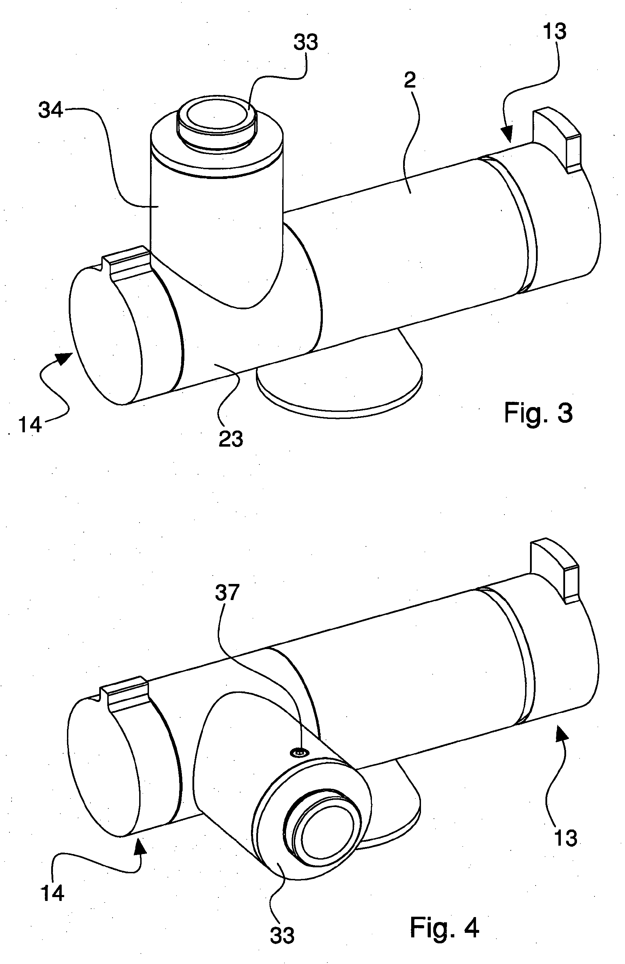

Fig. 3 is the enlarged view of Fig. 1 without the barrel.
Fig. 4 is the enlarged view of Fig. 2 without the barrel.

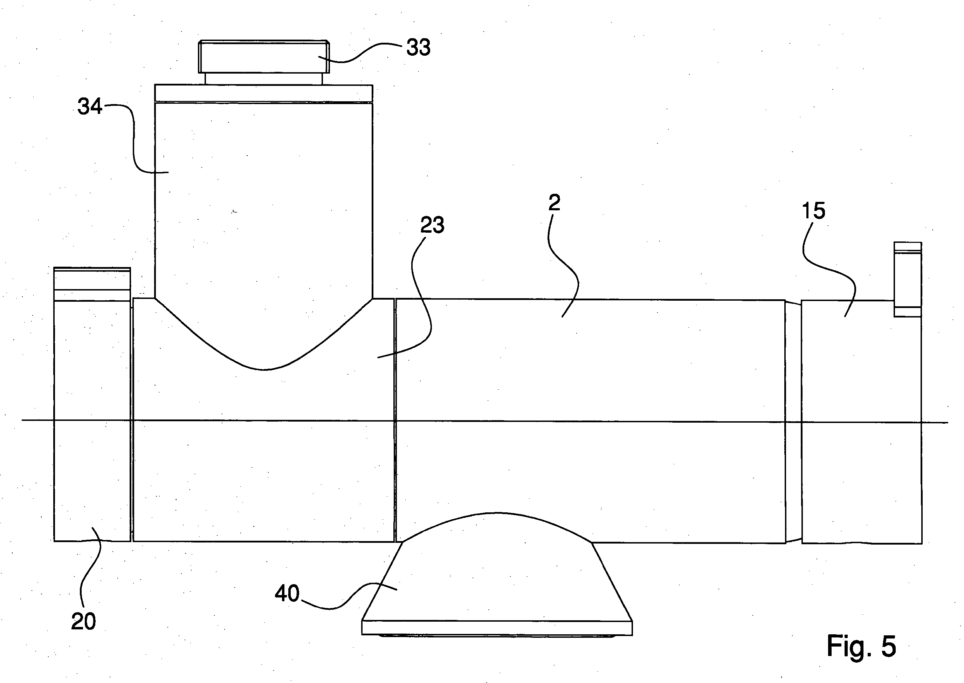

Fig. 5 is a vertical elevation side view of the supplying device in the configuration of Fig. 3.

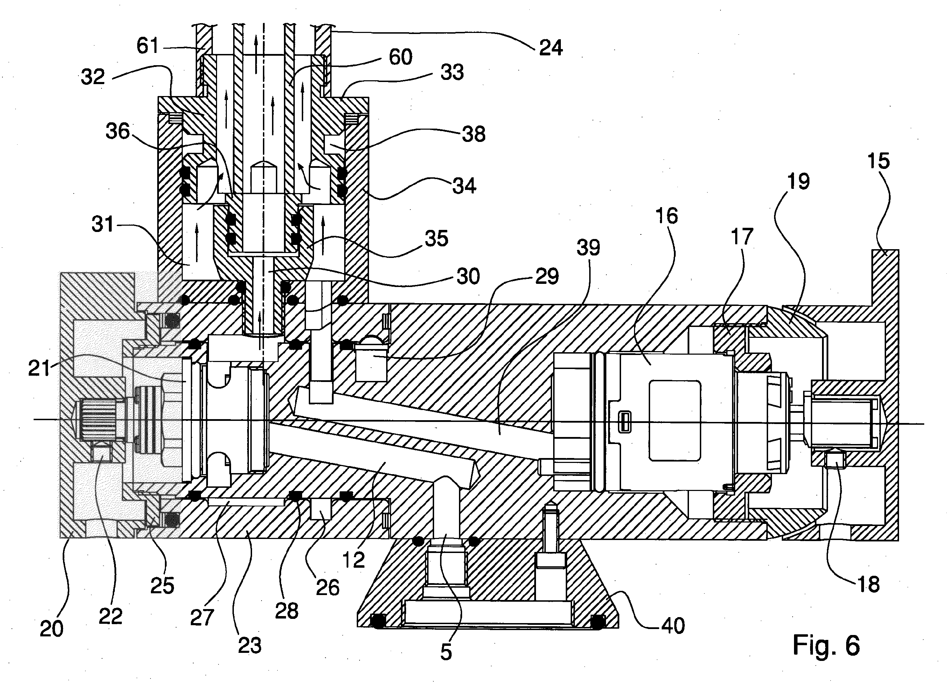

Fig. 6 is a section according to a vertical median plane of the device in the side view of Fig. 5.

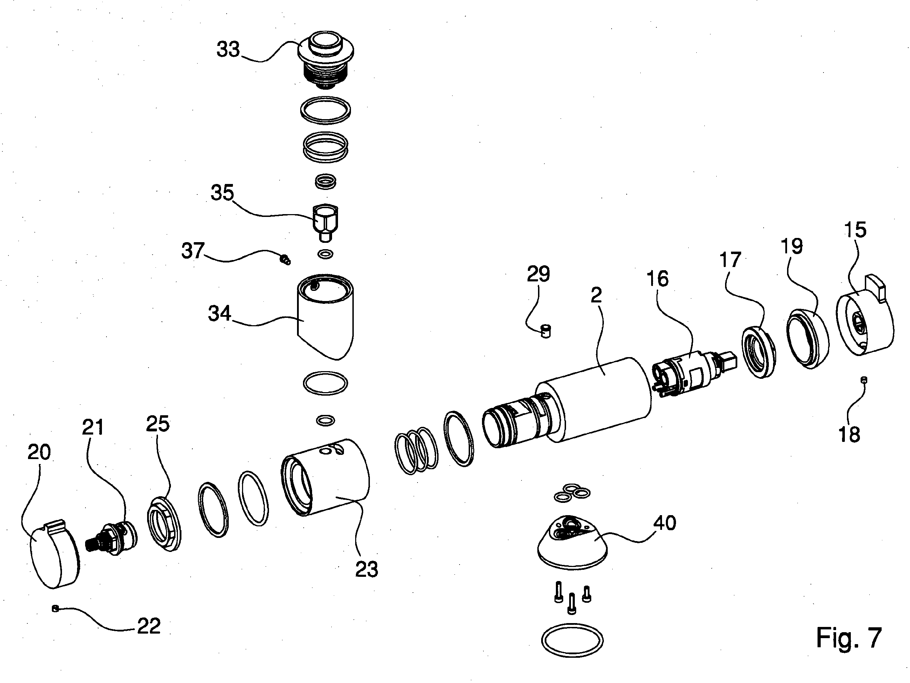

Fig. 7 is an exploded view of the device in Fig. 5.

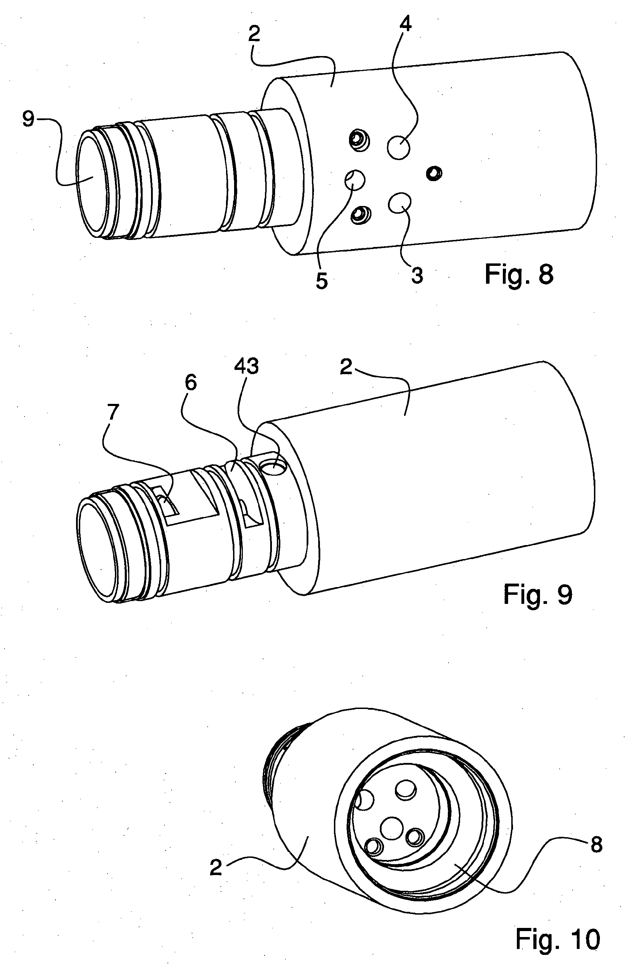

Figs. 8 to 10 are three views according to three different perspectives of the main body of the device in Fig. 5.

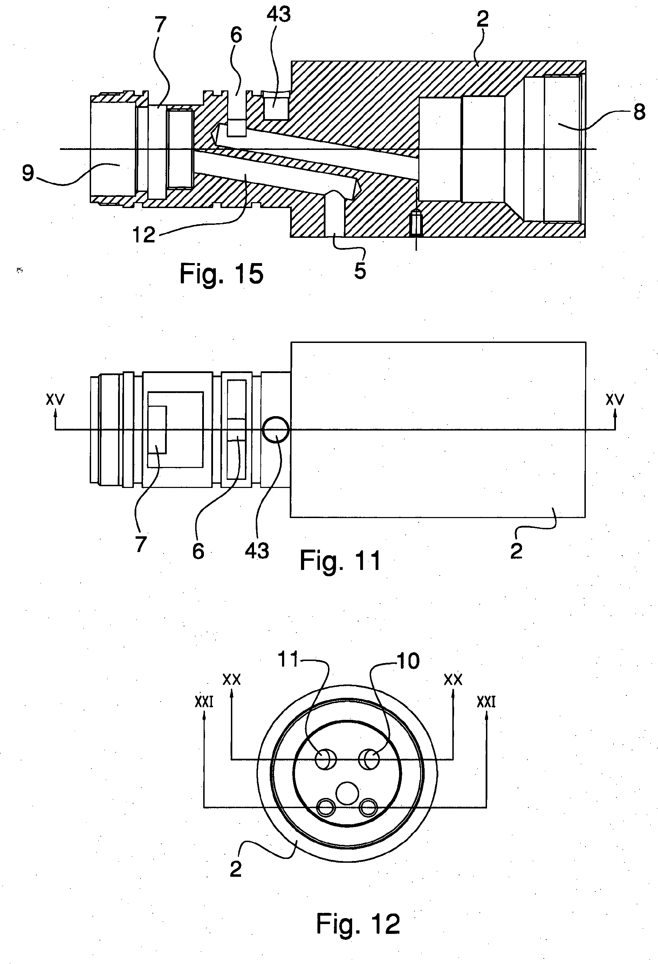

Fig. 11 is a top view of said main body.
Fig. 12 is a right view of Fig. 11.

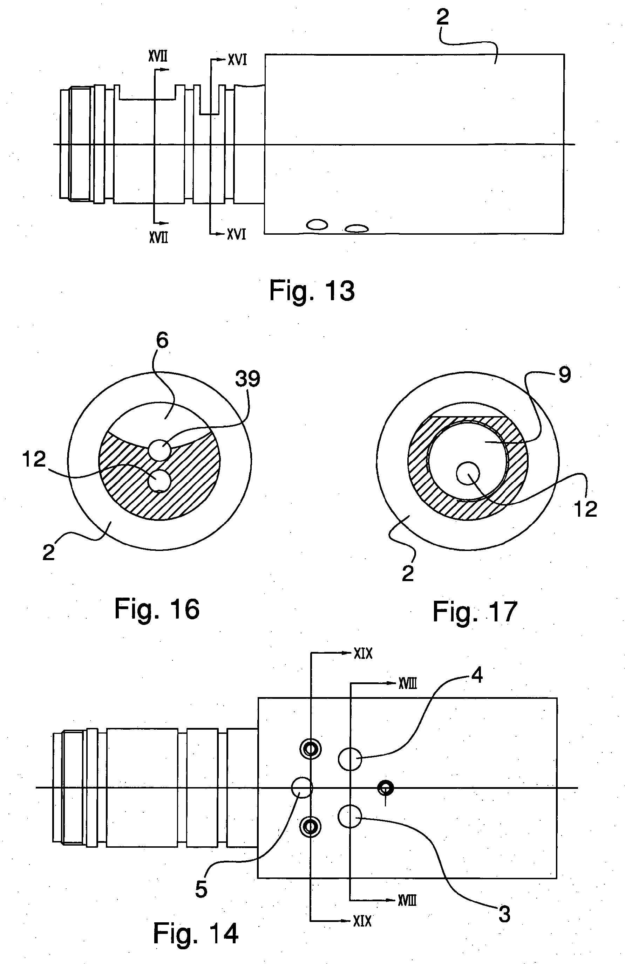

Fig. 13 is a front view of the device.
Fig. 14 is a bottom view of Fig. 13.
Fig. 15 is the section XV-XV of Fig. 11.
Fig. 16 is the section XVI-XVI of Fig. 13.
Fig. 17 is the section XVII-XVII of Fig. 13.

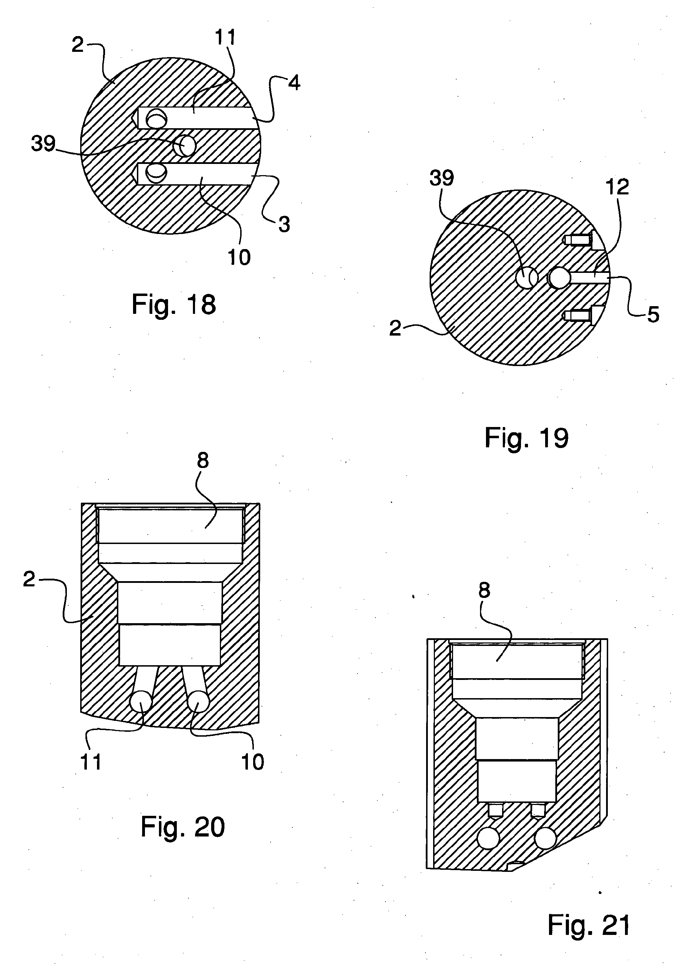

Fig. 18 is the section XVIII-XVIII of Fig. 14.
Fig. 19 is the section XIX-XIX of Fig. 14.
Fig. 20 is the section XX-XX of Fig. 12.
Fig. 21 is the section XXI-XXI of Fig. 12.
Fig. 22 is a perspective view of the rotatable bush of the device of Fig. 5.
Fig. 23 is a perspective view of the barrel-holding shank of the device of Fig. 5.
Fig. 24 is a perspective view of the rotatable barrel-holding connection of the device of Fig. 5.

### DETAILED DESCRIPTION

A supplying device has been indicated as a whole with 1, which selectively supplies at least four different types of liquid (sanitary water), particularly: cold water, hot water, mixed hot/cold water, treated water. The treated water can comprise, for example, purified water and/or carbonated water and/or refrigerated water and/or boiling water and/or water treated by means of other types of processes.

The supplying device 1 comprises a main body 2 having at least one (cylindrical) external surface which presents a first inlet 3 (cold water inlet), a second inlet 4 (hot water inlet), a third inlet 5 (treated water inlet), a first outlet 6 (mixed water outlet) and a second outlet 7 (treated water outlet).

The main body 2 can define, particularly, a first tap seat 8 (mixing tap seat) and a second tap seat 9 (treated water adjusting tap seat). The main body 2 can have, for example, a first conduit 10 (cold water conduit) therein, which is arranged to connect the first inlet 3 to the first tap seat 8. The main body 2 can have, for example, a second conduit 11 (hot water conduit) therein, which is arranged to connect the second inlet 4 to the first tap seat 8. The main body 2 can have, for example, a third conduit 12 (treated water conduit) therein, which is arranged to connect the third inlet 5 to the second tap seat 9.

The first tap seat 8 can be, particularly, in fluid communication (directly, without the interposition of valve means or other flow-adjusting means) with the first outlet 6. The second tap seat 9 can be, particularly, in fluid communication (directly, without the interposition of valve means or other flow-adjusting means) with the second outlet 7. The two tap seats 8 and 9 can be, as in this example, arranged at the opposite ends of a longitudinal axis of the main body 2.

The supplying device 1 can comprise a first tap 13 (particularly, a mixing tap for at least two streams) arranged in the first tap seat 8 and/or a second (flow-adjusting) tap 14 arranged in the second tap seat 9. Each tap 13 or 14 can have a control axis, particularly a rotation axis, by means of which a user can control the supply/mixing operations. The taps 13 and 14 can have two control axes parallel to each other. In this particular case, the two taps 13 and14 have control axes which are co-axial or coincident with each other.

The first tap 13 can comprise, as in this example, a control handle 15 for the mixed water and a mixing-adjustment cartridge 16 rotatably coupled with the first tap seat 8. The cartridge 16 can be fastened to the main body 2 by means of a ring nut 17 and to the control handle 15 by means of a dowel 18 with the interposition of a cartridge cap 19.

The second tap 14 can comprise, as in this example, a control handle 20 for the treated (purified) water and a stream-adjustment (ceramic) headwork 21 coupled with the second tap seat 9. The control handle 20 of the treated water can be fastened to the ceramic headwork 21 through a dowel 22.

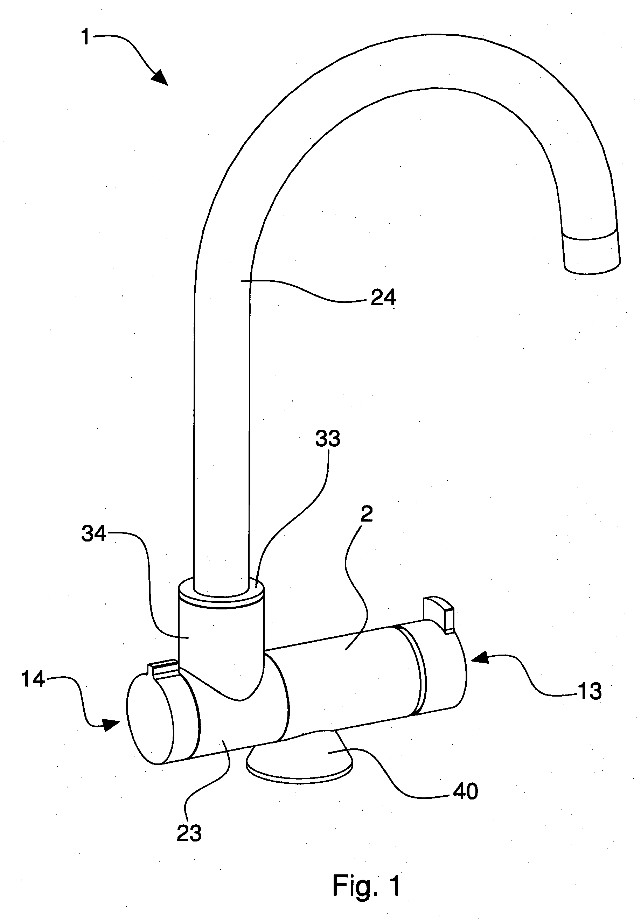

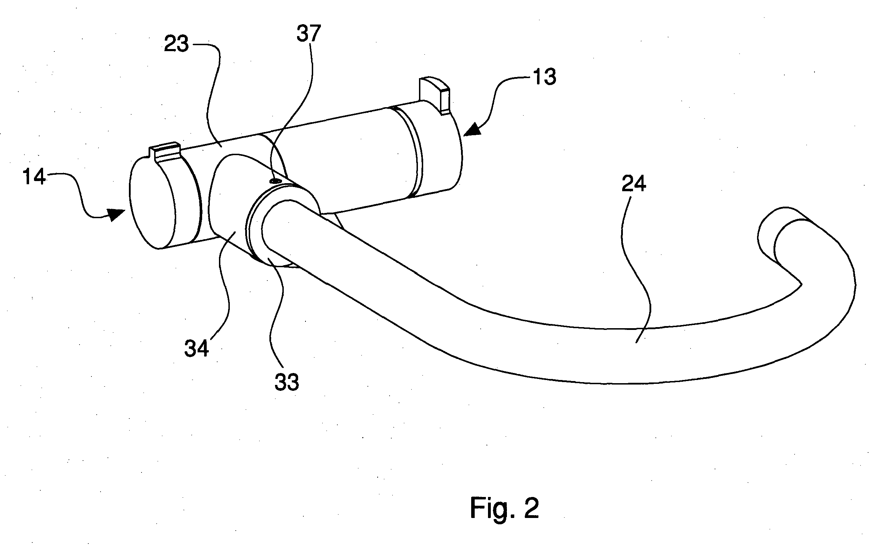

The supplying device 1 can comprise a rotatable bush 23 arranged to carry a tilting supply barrel 24. The rotatable (barrel-holding) bush 23 can rotate about the main body 2 between at least a first angular position (Fig. 1) and a second angular position (Fig. 2) at which positions the tilting barrel 24 takes at least a first raised position (Fig. 1) and a second lowered position (Fig. 2), respectively.

The rotatable bush 23 can be locked to the main body 2 by means of a ring nut 25. The bush 23 has a (cylindrical) side wall which has at least two distinct (through) holes, wherein a first hole 41 (for example, ovoid- or elongated-shaped) is passed through by the cold/hot water mixture, and a second hole 42 (for example, having a circular shape) is passed through by the treated water.

The supplying device 1 can comprise at least one first chamber 26 and at least one second chamber 27 which are defined between the bush 23 and the main body 2. The first and second chambers 26 and 27 can be in fluid communication with the first hole 41 and second hole 42, respectively.

The first and second chamber 26 and 27 can be in fluid communication with the first outlet 6 and second outlet 7, respectively. Particularly the two chambers 26 and 27 can be in fluid communication with the two outlets 6 and 7, respectively, in all the angular positions taken by the bush 23 while rotating between the first and second angular positions. Accordingly, the two outlets 6 and 7 provided on the main body 2 can be in fluid communication with the two holes 41 and 42 provided on the bush 23 in all the angular positions taken by the bush 23 while rotating between the first and second angular positions, thereby allowing the mixture stream and/or the treated water stream to be supplied irrespectively of the position of the tilting barrel between the first raised position and the second lowered position.

The supplying device 1 can comprise sealing means 28 (for example, an O-ring) which are arranged to provide a sealing between the bush 23 and main body 2 in a sealing area comprised between the first chamber 26 and second chamber 27.

The supplying device 1 can comprise, as stated above, a tilting supply barrel 24 carried by the bush 23 with the possibility of taking the first raised position and the second lowered position (whereas the rotatable bush, while rotating, takes the first angular position and second angular position). The supply barrel 24 can be in fluid communication with the first chamber 26 and/or second chamber 27, particularly in all the positions comprised between the first raised position and the second lowered position.

The supplying device 1 can comprise signaling means (for example, of the snap type) to signal when the bush 23 (and consequently the barrel 24 as well) is in at least one set angular position relative to the main body 2, particularly to signal when the barrel 24 is in a predetermined desired position (for example, in an upright raised position). These signaling means can comprise, for example, elastic snap engaging means arranged between the main body 2 and the bush 23 only to intervene in one (or more than one) set angular position. Particularly these engagement means can comprise an elastic pin 29 arranged in a recess 43 (of the main body 2, as in this case, or of the bush 23) and having a (rounded) end which can be inserted in a notch (on the bush 23, as in this case, or on the main body 2) in the preset angular position in which the notch results to be directly facing the elastic pin 29. The snap of the pin 29, which is due to the pin end being inserted in the notch while the bush 23 rotates, determines a signal that is perceived by the user when the barrel 24 is in the desired position. This signal can comprise an acoustic signal (the snap sound) and/or a mechanical signal provided by the (slight) mechanical resistance to the rotation which the user perceives, while he rotates the barrel 24, upon the pin 29 being engaged in the notch.

The elastic pin 29 can be disengaged from the notch by re-entering the inside of the recess 43 (in the main body 2), by means of a slight effort exerted by the user rotating the barrel 24 (in either direction) around the axis of rotation of the bush 23.

The supplying device 1 can comprise connecting means interposed between the rotatable bush 23 and the tilting barrel 24. This connecting means can define, as in the specific example, a central conduit 30 and a peripheral (annular) conduit 31 having inside at least one part of the central conduit 30. The connecting means comprise a manifold conduit 32 coupled to the tilting barrel 24. The tilting barrel 24 is defined by two tubular elements, which are co-axially arranged one inside the other. The two tubular elements define two distinct supply conduits which are coaxially arranged one inside the other and separated from each other, which allow the mixed water and treated water, respectively, to separately flow along two respective distinct and separated dispensing paths. Particularly, the barrel 24 comprises a first more internal tubular conduit 60, in fluid communication with the central conduit 30, which is intended to be passed through only by the treated water. The barrel 24 further comprises a second external co-axial conduit 61, in fluid communication only with said peripheral (annular) conduit 31, which is intended to be passed through only by the mixed water.

Therefore, the mixed water and the treated water can thus flow along distinct and separated dispensing paths until they reach two respective outlet mouths at the end of the barrel 24.

The central conduit 30 can be in fluid communication with one of the two outlets (the second outlet 7 in the specific case) and with one of the two holes on the bush (the second hole 42 in the specific case); the peripheral conduit 31 can be in fluid communication with the other of the two outlets (the first outlet 6 in the specific case) and with the other of the two holes on the bush (the first hole 41 in the specific case).

The connection means can comprise, as in the specific example, a (rotatable) barrel-holding connection 33 to which an end of the barrel 24 is fastened (for example, by means of a screw coupling). The barrel-holding connection 33 can be rotatable about a rotation axis (parallel to at least one straight portion of the barrel 24) in order to allow the barrel 24 to rotate on itself. Particularly the barrel-holding connection 33 can be rotatably mounted to a barrel-holding shank 34 (integrally rotatable with the bush 23) which can be, in turn, fastened to the bush 23 by means of a connection for the shank 35 (for example, provided with screw coupling means).

The barrel-holding connection 33 can be particularly provided with a (central, for example cylindrical) portion 36 rotatably coupled within a (cylindrical) seat of the shank connection 35. The barrel-holding connection 33 can be fastened to the barrel-holding shank 34 by means, for example, a locking screw 37 that can be engaged in an (annular) groove 38 provided on the outside of the barrel-holding connection 33.

The central conduit 30 can be provided, for example, at least partially in the shank connection 35 and/or in the barrel-holding connection portion 36 which is rotatably coupled to the barrel-holding connection 33. The manifold conduit 32 can be provided, for example, at least partially in the barrel-holding connection 33. The peripheral conduit 31 can be provided, for example, at least partially, in an annular space comprised between the barrel-holding shank 34 and the shank connection 35 and/or in an (annular) fluid passage area interposed between the central portion 36 of the barrel-holding connection and a peripheral (annular) portion of the barrel-holding connection 33. Sealing means can be provided (for example, one or more O-rings) operating between said peripheral portion (annular) of the barrel-holding connection 33 and the barrel-holding shank 34.

The first chamber 26 and/or the second chamber 27 extend in length, particularly, each at least partially developing as a circumference arc co-axial with the axis of rotation of the bush 23 rotatable about the main body 2.

The first chamber 26 can be defined, as in this case, by a recessed groove provided in an internal cylindrical surface of the bush 23 and facing a cylindrical surface of the main body 2. Similarly, the second chamber 27 can also be defined as a recessed groove provided in an internal cylindrical surface of the bush 23 and facing a cylindrical surface of the main body 2.

The supplying device 1 can comprise a fourth conduit 39 arranged inside the main body 2 in order to connect the first tap seat 8 (in the cold/hot water mixing area) to the first outlet 6. The fourth conduit 39 can have, as in this case, at least one (straight) portion that is alongside, for example in a substantially parallel manner, to at least one (straight) portion of the third conduit 12.

The fourth conduit 39 can have, particularly, at least one oblique portion starting from the first tap seat 8 and being arranged obliquely relative to a control axis of the first tap 13.

The third conduit 12 can have, as in this example, at least one oblique portion which ends in the second tap seat 9 and which is obliquely arranged relative to a control axis of the second tap 14.

The first chamber 26 and the second chamber 27 can be in fluid communication, respectively, with the first outlet 6 and with the second outlet 7, in all the angular positions taken by the bush 23 and comprised between the first angular position and the second angular position.

As in the example described herein, the main body 2 can be integrally provided in one piece and/or the rotatable bush 23 can be integrally provided in one piece.

The supplying device 1 can have, as in the example described herein, a base 40 fastened to the main body 2 (for example, by means of screw fixing means) and having inside three conduits connected to the supply of the three liquids to be supplied/mixed (cold water, hot water, treated water).

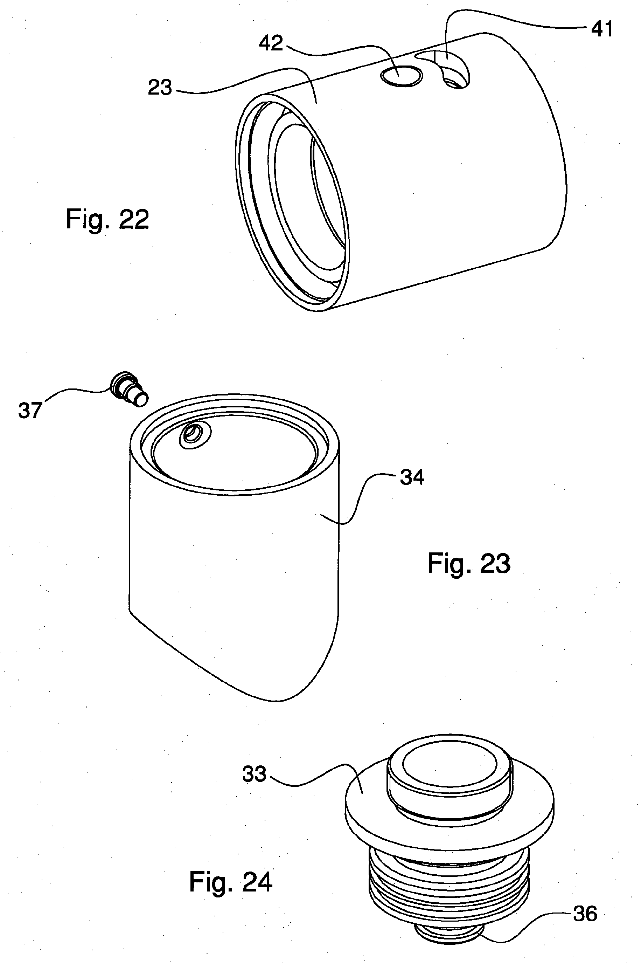

In Fig. 22, the first hole 41 and the second hole 42 can be seen, which are provided in a (side, for example cylindrical) wall of the bush 23.

The device described herein is an example of a supplying device with tilting barrel which allows the selective supply of a mixture of two liquids (cold water and hot water) and a third liquid (treated water).

## Claims

1. Supplying device (1) comprising:
- a main body (2);
- a first mixing tap (13) coupled with said main body (2);
- a second tap (14) coupled with said main body (2);
- a tilting dispensing barrel (24) that is movable with respect to said main body (2) with the possibility of reaching at least one first raised position and at least one second lowered position, **characterised in that** it further comprises:
- a rotatable bush (23) arranged for carrying said barrel (24), said bush (23) being able to rotate around said main body (2) between at least a first angular position and a second angular position at which said barrel (24) has respectively, said first raised position and said second lowered position;
- a first fluid path exiting said first mixing tap (13) and a second fluid path exiting said second tap (14), said first path and said second path passing, separated from one another, through said bush (23) to reach said dispensing barrel (24),
wherein said main body (2) has an external surface that has a first inlet (3), a second inlet (4), a third inlet (5), a first outlet (6) and a second outlet (7), said main body (2) defining a first tap seat (8) that receives said first mixing tap (13) and a second tap seat (9) that receives said second tap (14); said main body (2) having inside a first conduit (10) arranged for connecting said first inlet (3) with said first tap seat (8), a second conduit (11) arranged for connecting said second inlet (4) to said first tap seat (8) and a third conduit (12) arranged for connecting said third inlet (5) to said second tap seat (9); said first tap seat (8) being in fluid communication with said first outlet (6); said second tap seat (9) being in fluid communication with said second outlet (7); said first path comprising at least a first chamber (26) defined between said bush (23) and said main body (2); said second path comprising at least a second chamber (27) defined between said bush (23) and said main body (2); said first and second chamber (26; 27) being in fluid communication with, respectively said first outlet (6) and said second outlet (7) in all the angular positions reached by the bush (23) in the rotation thereof between said first angular position and said second angular position; sealing means being arranged for making a seal between said bush (23) and said main body (2) in a zone comprised between said first chamber (26) and said second chamber (27) to separate said first path and said second path from one another; said bush (23) having a wall with a first through hole (41) and a second through hole (42), said first hole and second hole (41; 42) being in fluid communication with, respectively said first chamber (26) and said second chamber (27).

2. Device according to claim 1, wherein said dispensing barrel (24) is rotatably coupled with said bush (23) so as to be able to rotate around axes arranged transversely to a longitudinal axis of said main body (2) around which said bush (23) is rotatable and wherein in said dispensing barrel (24) two distinct and separate dispensing paths are defined that are in fluid communication with said first and second chamber (26; 27) respectively.

3. Device according to claim 1 or 2, wherein said at least a first chamber (26) and/or said at least a second chamber (27) extends in length at least in part as a circumference arc that is coaxial with a rotation axis of said rotatable bush (23) around said main body (2).

4. Device according to any one of the preceding claims, wherein said at least a first chamber (26) and/or said at least a second chamber (27) is defined by a recessed groove obtained in an internal cylindrical surface of said bush (23) and facing a cylindrical surface of said main body (2).

5. Device according to any one of the preceding claims, comprising a fourth conduit (39) arranged inside said main body (2) to connect said first tap seat (8) to said first outlet (6), said fourth conduit (39) having at least one portion that is alongside, in a substantially parallel manner, at least one portion of said third conduit (12); said fourth conduit (39) having, optionally, at least one oblique portion that starts from said first tap seat (8) and is arranged obliquely to a control axis of said first mixing tap (13).

6. Device according to any one of the preceding claims, wherein said third conduit (12) has at least one oblique portion that ends in said second tap seat (9) and is arranged obliquely to a control axis of said second tap (14).

7. Device according to any one of the preceding claims, wherein said first chamber and second chamber (26; 27) are in fluid communication with said first outlet and second outlet (6; 7) in all the angular positions reached by the bush (23) and comprised between said first angular position and said second angular position.

8. Device according to any one of the preceding claims, comprising connecting means (33; 34; 35) interposed between said rotatable bush (23) and said tilting barrel (24), said connecting means defining a central conduit (30), in fluid communication with said second chamber (27), and a peripheral annular conduit (31) having internally at least a part of said central conduit (30) and in fluid communication with said first chamber (26), wherein said tilting barrel (24) comprises a first more internal tubular conduit (60), in fluid communication with said central conduit (30), which is intended for being traversed only by treated water, and a second more external coaxial conduit (61), in fluid communication with said peripheral annular conduit (31), which is intended to be traversed by only mixed water.

9. Device according to any preceding claim, comprising signaling means (29) for signaling when said bush (23) is arranged in a set angular position with respect to said main body (2).

## Patentansprüche

1. Versorgungsvorrichtung (1) umfassend:
- einen Hauptkörper (2);
- eine erste Mischarmatur (13), die mit dem Hauptkörper (2) gekoppelt ist;
- eine zweite Armatur (14), die mit dem Hauptkörper (2) gekoppelt ist;
- einen kippenden Zapflauf (24) der in Bezug auf den Hauptkörper (2) bewegbar ist, mit der Möglichkeit, zumindest eine erste angehobene Position und zumindest eine zweite abgesenkte Position zu erreichen, **dadurch gekennzeichnet, dass** sie ferner umfasst:
- eine drehbare Buchse (23), die angeordnet ist, den Lauf (24) zu tragen, wobei die Buchse (23) fähig ist, sich um den Hauptkörper (2) zwischen zumindest einer ersten winkligen Position und einer zweiten winkligen Position zu drehen, in welcher der Lauf (24) entsprechend die erste angehoben Position und die zweite abgesenkte Position einnimmt;
- einen ersten Fluidpfad, der die erste Mischarmatur (13) verlässt und einen zweiten Fluidpfad, der die zweite Armatur (14) verlässt, wobei der erst Pfad und der zweite Pfad getrennt voneinander durch die Buchse (23) verlaufen, um den Zapflauf (24) zu erreichen,
wobei der Hauptkörper (2) eine äußere Oberfläche hat, die einen ersten Einlass (3), einen zweiten Einlass (4), einen dritten Einlass (5), einen ersten Auslass (6) und einen zweiten Auslass (7) aufweist, wobei der Hauptkörper (2) einen ersten Armatursitz (8) ausbildet, der die erste Mischarmatur (13) und einen zweiten Armatursitz (9) aufnimmt, der die zweite Armatur (14) aufnimmt, wobei der Hauptkörper (2) im Inneren eine erste Leitung (10) aufweist, die angeordnet ist, den ersten Einlass (3) mit dem zweiten Armatursitz (8) zu verbinden, eine zweite Leitung (11), die angeordnet ist, den zweiten Einlass (4) mit dem ersten Armatursitz (8) zu verbinden, und eine dritte Leitung (12), die angeordnet ist, den dritten Einlass (5) mit dem zweiten Armatursitz (9) zu verbinden; wobei der erste Armatursitz (8) in Fluidkommunikation mit dem ersten Auslass (6) steht; der zweite Armatursitz (9) in Fluidkommunikation mit dem zweiten Auslass (7) steht; wobei der erste Pfad zumindest eine erste Kammer (26) umfasst, die zwischen der Buchse (23) und dem Hauptkörper (2) ausgebildet ist; wobei der zweite Pfad zumindest eine zweite Kammer (27) umfasst, die zwischen der Buchse (23) und dem Hauptkörper (2) ausgebildet ist; wobei die erste und zweite Kammer (26; 27) in Fluidkommunikation mit dem entsprechenden ersten Auslass (6) und dem zweiten Auslass (7) in jeder der winkligen Positionen steht, die durch die Buchse (23) bei deren Drehung zwischen der ersten winkligen Position und der zweiten winkligen Position, erreicht werden; wobei Dichtmittel angeordnet sind, um eine Dichtung zwischen der Buchse (23) und dem Hauptkörper (2) in einem Bereich herzustellen, der zwischen der ersten Kammer (26) und der zweiten Kammer (27) umfasst wird, um den ersten Pfad und den zweiten Pfad voneinander zu trennen; wobei die Buchse (23) eine Wand mit einem ersten Durchgangsloch (41) und einem zweiten Durchgangsloch (42) aufweist, wobei das erste Loch und das zweite Loch (41; 42) in Fluidkommunikation mit der entsprechenden ersten Kammer (26) und der zweiten Kammer (27) stehen.

2. Vorrichtung nach Anspruch 1, wobei der Zapflauf (24) drehbar mit der Buchse (23) so gekoppelt ist, dass es möglich ist, um Achsen zu drehen, die quer zu einer longitudinalen Achse des Hauptkörpers (2), um den die Buchse (23) drehbar ist, angeordnet sind, und wobei in dem Zapflauf (24) zwei verschiedene und separate Zapfläufe ausgebildet sind, die in Fluidkommunikation mit entsprechend der ersten und der zweiten Kammer (26; 27) stehen.

3. Vorrichtung nach Anspruch 1 oder 2, wobei die zumindest eine erste Kammer (26) und/oder die zumindest eine zweite Kammer (27) sich der Länge nach zumindest zum Teil als ein umlaufender Bogen erstreckt, der zu einer Drehachse der um den Hauptkörper (2) drehbaren Buchse (23) koaxial ist.

4. Vorrichtung nach einem der vorherigen Ansprüche, wobei die zumindest eine erste Kammer (26) und/oder die zumindest eine zweite Kammer (27) durch eine rückspringende Nut ausgebildet wird, die in einer inneren Zylinderoberfläche der Buchse (23) und die einer zylindrischen Oberfläche des Hauptkörpers (2) zugewandt ist, erhalten wurde.

5. Vorrichtung nach einem der vorherigen Ansprüche, umfassend eine vierte Leitung (39), die innerhalb des Hauptkörpers (2) angeordnet ist, um den ersten Armatursitz (8) mit dem ersten Auslass (6) zu verbinden, wobei die vierte Leitung (39) zumindest einen Abschnitt aufweist, der in einer im Wesentlichen parallelen Weise zu zumindest einem Abschnitt der dritten Leitung (12) längsseits verläuft; wobei die vierte Leitung (39) gegebenenfalls zumindest einen schrägen Abschnitt aufweist, die an dem ersten Armatursitz (8) beginnt und schräg an einer Regelungsachse der ersten Mischarmatur (13) angeordnet ist.

6. Vorrichtung nach einem der vorherigen Ansprüche, wobei die dritte Leitung (12) zumindest einen schrägen Abschnitt aufweist, der in dem zweiten Armatursitz (9) endet und schräg zu einer Regelungsachse der zweiten Armatur (14) angeordnet ist.

7. Vorrichtung nach einem der vorherigen Ansprüche, wobei die erste Kammer und die zweite Kammer (26; 27) in Fluidkommunikation mit dem ersten Auslass und dem zweiten Auslass (6; 7) in jeder der winkligen Positionen stehen, die durch die Buchse (23) erreicht werden und die zwischen der ersten winkligen Position und der zweiten winkligen Position enthalten sind.

8. Vorrichtung nach einem der vorherigen Ansprüche, umfassend Verbindungsmittel (33; 34; 35), die zwischen der drehbaren Buchse (23) und dem Kipplauf (24) zwischengeschaltet sind, wobei die Verbindungsmittel eine zentrale Leitung (30) ausbilden, die mit der zweiten Kammer (27) in Fluidkommunikation steht, und eine periphere, ringförmige Leitung (31), aufweisend im Inneren zumindest einen Teil der zentralen Leitung (30) und die in Fluidkommunikation mit der der ersten Kammer (26) steht, wobei der Kipplauf (24) eine erste eher innere rohrförmige Leitung (60) aufweist, die in Fluidkommunikation mit der zentralen Leitung (30) steht, die vorgesehen ist, nur von behandeltem Wasser durchlaufen zu werden, und eine zweite eher äußere koaxiale Leitung (61), die in Fluidkommunikation mit der peripheren ringförmigen Leitung (31) steht, die vorgesehen ist, nur von gemischtem Wasser durchlaufen zu werden.

9. Vorrichtung nach einem der vorherigen Ansprüche, umfassend Signalmittel (29) zum Signalisieren, wenn die Buchse (23) in einer eingestellten winkligen Position in Bezug auf den Hauptkörper (2) angeordnet ist.

## Revendications

1. Dispositif d'alimentation (1) comprenant :
- un corps principal (2) ;
- un premier robinet mélangeur (13) couplé audit corps principal (2) ;
- un deuxième robinet (14) couplé audit corps principal (2) ;
- un canon de distribution oscillant (24) qui est mobile par rapport audit corps principal (2) avec la possibilité d'atteindre au moins une première position relevée et au moins une deuxième position abaissée, **caractérisé en ce qu'**il comprend en outre :
- une douille rotative (23) agencée pour porter ledit canon (24), ladite douille (23) étant apte à tourner autour dudit corps principal (2) entre au moins une première position angulaire et une deuxième position angulaire au niveau desquelles ledit canon (24) a respectivement, ladite première position relevée et ladite deuxième position abaissée ;
- un premier chemin de fluide sortant dudit premier robinet mélangeur (13) et un deuxième chemin de fluide sortant dudit deuxième robinet (14), ledit premier chemin et ledit deuxième chemin passant, séparés l'un de l'autre, à travers ladite douille (23) pour atteindre ledit canon de distribution (24),
dans lequel ledit corps principal (2) a une surface externe qui a une première entrée (3), une deuxième entrée (4), une troisième entrée (5), une première sortie (6) et une deuxième sortie (7), ledit corps principal (2) définissant un premier siège de robinet (8) qui reçoit ledit premier robinet mélangeur (13) et un deuxième siège de robinet (9) qui reçoit ledit deuxième robinet (14) ; ledit corps principal (2) ayant à l'intérieur un premier conduit (10) agencé pour relier ladite première entrée (3) audit premier siège de robinet (8), un deuxième conduit (11) agencé pour relier ladite deuxième entrée (4) audit premier siège de robinet (8) et un troisième conduit (12) agencé pour relier ladite troisième entrée (5) audit deuxième siège de robinet (9) ; ledit premier siège de robinet (8) étant en communication fluidique avec ladite première sortie (6) ; ledit deuxième siège de robinet (9) étant en communication fluidique avec ladite deuxième sortie (7) ; ledit premier chemin comprenant au moins une première chambre (26) définie entre ladite douille (23) et ledit corps principal (2) ; ledit deuxième chemin comprenant au moins une deuxième chambre (27) définie entre ladite douille (23) et ledit corps principal (2) ; lesdites première et deuxième chambres (26 ; 27) étant en communication fluidique avec, respectivement ladite première sortie (6) et ladite deuxième sortie (7) dans toutes les positions angulaires atteintes par la douille (23) dans la rotation de celle-ci entre ladite première position angulaire et ladite deuxième position angulaire ; un moyen d'étanchéité étant agencé pour faire un joint entre ladite douille (23) et ledit corps principal (2) dans une zone comprise entre ladite première chambre (26) et ladite deuxième chambre (27) pour séparer ledit premier chemin et ledit deuxième chemin l'un de l'autre ; ladite douille (23) ayant une paroi avec un premier trou traversant (41) et un deuxième trou traversant (42), lesdits premier trou et deuxième trou (41 ; 42) étant en communication fluidique avec, respectivement ladite première chambre (26) et ladite deuxième chambre (27).

2. Dispositif selon la revendication 1, dans lequel ledit canon de distribution (24) est couplé de manière rotative à ladite douille (23) de façon à être apte à tourner autour d'axes agencés transversalement à un axe longitudinal dudit corps principal (2) autour duquel ladite douille (23) est rotative et dans lequel dans ledit canon de distribution (24) deux voies de distribution distinctes et séparées sont définies qui sont en communication fluidique avec lesdites première et deuxième chambres (26 ; 27) respectivement.

3. Dispositif selon la revendication 1 ou 2, dans lequel ladite au moins une première chambre (26) et/ou ladite au moins une deuxième chambre (27) s'étend en longueur au moins en partie comme un arc de circonférence qui est coaxial à un axe de rotation de ladite douille rotative (23) autour dudit corps principal (2).

4. Dispositif selon l'une quelconque des revendications précédentes, dans lequel ladite au moins une première chambre (26) et/ou ladite au moins une deuxième chambre (27) est définie par une rainure évidée obtenue dans une surface cylindrique interne de ladite douille (23) et faisant face à une surface cylindrique dudit corps principal (2).

5. Dispositif selon l'une quelconque des revendications précédentes, comprenant un quatrième conduit (39) agencé à l'intérieur dudit corps principal (2) pour relier ledit premier siège de robinet (8) à ladite première sortie (6), ledit quatrième conduit (39) ayant au moins une portion qui est à côté, de manière sensiblement parallèle, d'au moins une portion dudit troisième conduit (12) ; ledit quatrième conduit (39) ayant, en option, au moins une portion oblique qui part dudit premier siège de robinet (8) et est agencé obliquement par rapport à un axe de commande dudit premier robinet mélangeur (13).

6. Dispositif selon l'une quelconque des revendications précédentes, dans lequel ledit troisième conduit (12) a au moins une portion oblique qui se termine dans ledit deuxième siège de robinet (9) et est agencé obliquement par rapport à un axe de commande dudit deuxième robinet (14).

7. Dispositif selon l'une quelconque des revendications précédentes, dans lequel lesdites première chambre et deuxième chambre (26 ; 27) sont en communication fluidique avec lesdites première sortie et deuxième sortie (6 ; 7) dans toutes les positions angulaires atteintes par la douille (23) et comprises entre ladite première position angulaire et ladite deuxième position angulaire.

8. Dispositif selon l'une quelconque des revendications précédentes, comprenant des moyens de connexion (33 ; 34 ; 35) intercalés entre ladite douille rotative (23) et ledit canon oscillant (24), lesdits moyens de connexion définissant un conduit central (30), en communication fluidique avec ladite deuxième chambre (27), et un conduit annulaire périphérique (31) ayant en interne au moins une partie dudit conduit central (30) et en communication fluidique avec ladite première chambre (26), dans lequel ledit canon oscillant (24) comprend un premier conduit tubulaire plus interne (60), en communication fluidique avec ledit conduit central (30), qui est destiné à être traversé uniquement par de l'eau traitée, et un deuxième conduit coaxial plus externe (61), en communication fluidique avec ledit conduit annulaire périphérique (31), qui est destiné à être traversé uniquement par de l'eau mélangée.

9. Dispositif selon l'une quelconque des revendications précédentes, comprenant un moyen de signalisation (29) pour signaler à quel moment ladite douille (23) est agencée dans une position angulaire réglée par rapport audit corps principal (2).
